# EUROPÄISCHE PATENTSCHRIFT

(11) **EP 2 881 282 B1**
(45) Veröffentlichungstag und Bekanntmachung des Hinweises auf die Patenterteilung: **17.05.2017**
(21) Anmeldenummer: 14004079.1
(22) Anmeldetag: 03.12.2014
(51) Int. Cl.: B60P 7/08

(54) **Ladungssicherungswinkel**
Load securing angle bracket
Angle de sécurisation de charge

(30) Priorität: 05.12.2013 DE 102013020359
(43) Veröffentlichungstag der Anmeldung: 10.06.2015
(73) Patentinhaber: Thomas Huwer KG, 55758 Oberreidenbach (DE)
(72) Erfinder: Huwer, Thomas, 55758 Oberreidenbach (DE)
(74) Vertreter: Patentanwälte Olbricht Buchhold Keulertz

(56) Entgegenhaltungen:
- DE-U1-202005 007 993
- DE-U1-202012 005 252
- US-A1- 2015 014 334

## Beschreibung

Die vorliegende Erfindung befasst sich mit einem Ladungssicherungswinkel aus Blech mit zwei im wesentlichen rechtwinklig zueinander abgewinkelten Schenkeln, wobei ein zur Auflage auf der Ladung bestimmter horizontaler Schenkel eine dachartige Erhebung aufweist, die eine Andruckstelle für einen Spanngurt bildet.

Ladungssicherungswinkel, die auch als Kantenschutzwinkel bezeichnet werden, dienen dazu, druckempfindliche Ladung auf Ladeflächen von Lastkraftwagen zu sichern. Dies erfolgt in der Regel mit Spanngurten, mit welchen die Ladung gegen die Ladefläche verzurrt wird. Ein Beispiel für eine druckempfindliche Ladung sind Gipskartonplatten, die auf der Ladefläche eines Lastkraftwagens gestapelt und dann mit Hilfe von sie umschließenden Spanngurten verspannt werden. Die Ladungssicherungswinkel werden dann insbesondere an den oberen Kanten auf die Gipskartonplatten aufgelegt, über die der Spanngurt geführt werden soll.

Ausführungsbeispiele bekannter Ladungssicherungswinkel sind beispielsweise aus der EP 1 930 212 B1 bekannt. Der dort gezeigte Ladungssicherungswinkel besitzt eine Z-förmige Grundform.

Ein Ladungssicherungswinkel der eingangs genannten Art ist aus der DE 20 2012 005 252 U1 bekannt. Die dort gezeigte dachförmige Erhebung hat ebenso wie die Erhöhung in dem zuvor genannten Europäischen Patent den Zweck, die sehr hohen Andruckkräfte, die durch den Spanngurt erzeugt werden, weg von der Kante auf die Oberfläche der Ladung zu verlagern, da beispielsweise die zuvor genannten Gipsplatten in diesem Bereich viel weniger empfindlich sind als an den zum Ausbrechen neigenden Kanten.

Neuere Vorschriften zur Ladungssicherung schreiben vor, dass die Spannkräfte von Spanngurten zur Ladungssicherung 1000 dN betragen sollen, damit ein Verrutschen der Ladung unter allen Umständen, beispielsweise auch bei Unfällen, vermieden werden kann. Es hat sich aber gezeigt, dass die bekannten Ausführungsformen von Ladungssicherungswinkeln diesen hohen Kräften entweder nicht standhalten können oder sehr große Blechdicken erforderlich werden, um die auftretenden Kräfte ohne Deformation des Ladungssicherungswinkel an die Ladung ableiten zu können. So ist beispielsweise in der DE 20 2012 005 252 U1 eine bevorzugte Materialstärke von 2,5 mm genannt, so dass der Ladungswinkel zum Einen einen hohen Materialbedarf mit entsprechend höheren Herstellungskosten, sowie ein sehr hohes Gewicht bedeutet, dass es dem Kraftfahrer erschwert, die Ladungssicherungswinkel zu handhaben. Hierbei ist zu bedenken, dass bei einem großen Lastkraftwagen ohne weiteres 10 oder mehr Ladungssicherungswinkel zum Sichern einer Ladung zum Einsatz kommen können. Bei den genannten Materialstärken des Standes der Technik lassen sich diese nicht mehr ohne weiteres alle gemeinsam stapeln und tragen.

Weitere Kantenschutzwinkel sind aus der DE 20 2013 002 167 U1, der JP S51-51 993 U, der CA 923 171 A, der JP 2000- 309 492 A und der US 6 820 906 B1 bekannt.

Die Aufgabe der vorliegenden Erfindung besteht darin, einen Ladungssicherungswinkel zu schaffen, der ein sicheres Ableiten der vorgeschriebenen Spannkräfte auf die Ladung ohne Deformation des Ladungssicherungswinkels ermöglicht.

Erfindungsgemäß wird die Aufgabe dadurch gelöst, dass die dachförmige Erhebung über ein Scharnier schwenkbar mit dem horizontalen Schenkel verbunden ist und um wenigstens 90° aus der Auflageposition in eine Ruheposition verschwenkbar ist wobei die dachförmige Erhebung zwei Flanken aufweist, die in der Auflageposition auf flächigen Bereichen des horizontalen Schenkels in einer Spannstellung ruhen.

Der erfindungsgemäße Ladungssicherungswinkel hat den Vorteil, dass die auf die dachförmige Erhebung einwirkenden Kräfte eines gespannten Spanngurtes nicht mehr nur über die Auflagekanten am Randbereich der Erhebung auf die Ladung abgeleitet werden, sondern durch die darunter liegenden flächigen Bereiche des horizontalen Schenkels auf eine größere Fläche gleichmäßig verteilt werden. Es hat sich auch gezeigt, dass der Ladungssicherungswinkel selbst durch diese Maßnahme stabilisiert wird und unter den vorgeschriebenen Spannkräften weniger zur Verformung neigt.

Dadurch, dass bei welcher die dachförmige Erhebung über ein Scharnier schwenkbar an dem horizontalen Schenkel angelenkt ist und um wenigstens 90° aus der Auflageposition in eine Lagerposition verschwenkbar ist, entsteht der Vorteil, dass sich die dachförmige Erhebung bei Nichtgebrauch des Ladungssicherungswinkels um 90°, vorzugsweise bis zu 180° abklappen lässt, woraufhin dann mehrere Ladungssicherungswinkel übereinander gestapelt werden können. Dadurch ist es möglich, die für einen Lastkraftwagen notwendige Vielzahl von Ladungssicherungswinkeln gestapelt in einem vergleichsweise kleinen Behältnis aufzubewahren, wenn sie nicht benötigt werden.

Beispielsweise kann das Scharnier durch zwei Blechlaschen an dem horizontalen Schenkel gebildet sein, die in Schlitze der dachförmigen Erhebung eingreifen. Vorzugsweise befinden sich diese Schlitze in einem in der aufgestellten Position der dachförmigen Erhebung parallel auf dem horizontalen Schenkel aufliegenden Bereich, d. h. sie liegen nicht im Bereich des unmittelbaren Kraftflusses. Gleichwohl können die Blechlaschen über die Schlitze als seitliche Abstützung der Flanke der dachförmigen Erhebung dienen, um eventuelle Seitenkräfte aufzunehmen, die im Vergleich zu den Spannkräften erheblich niedriger liegen.

Die Blechlaschen sind vorzugsweise am Ende des horizontalen Schenkels angeformt und zu dessen Oberseite hin umgebogen. Dadurch steht genügend Material zur Verfügung, im Bedarfsfall nahezu vollständig geschlossene Ösen durch die Blechlaschen auszubilden, so dass sich ein besonders stabiler Aufbau ergibt.

In einer bevorzugten Ausführungsform der Erfindung ist vorgesehen, dass horizontale Schenkel zur Ausbildung der flächigen Bereiche unterhalb der Flanken der dachförmigen Erhebung durchgängig fortgeführt ist. Bei dieser Ausführungsform liegt die dachförmige Erhebung entsprechend auf dem horizontal durchgängigen Schenkel auf, wobei der zwischen den flächigen Bereichen liegende Bereich auch die durch die Neigung der Flanken der dachförmigen Erhebung aufgebrachten Querkräfte ableiten kann, so dass diese gar nicht mehr in das Material eingeleitet werden.

In einer weiteren bevorzugten Ausführungsform der Erfindung ist vorgesehen, dass die Flanken der dachförmigen Erhebung an Erhöhungen auf der Oberseite des horizontalen Schenkels seitlich abgestützt sind. Eine derartige Maßnahme kann sicherstellen, dass bei einer einfachen Auflage der Flanken auf der Oberseite des horizontalen Schenkels die Querkräfte nicht zu einem seitlichen Wegrutschen der Flanke führen können. Geeignete Erhöhungen sind bei einem aus Blech ausgebildeten Schenkel beispielsweise Sicken, Prägungen und/oder abgewinkelte Blechlaschen, um zwei einfach herzustellende Maßnahmen darzustellen.

Vorzugsweise sind wenigstens im Bereich der Biegestellen zwischen den beiden Schenkeln und im Bereich der höchsten Stelle der Erhebung jeweils zwei benachbarte Sicken in der Verlaufsrichtung des Spanngurtes vorgesehen, die dessen Lage seitlich begrenzen. Die Sicken bilden seitliche Anlagestellen des Spanngurtes und sorgen dafür, dass ein seitliches Verrutschen ausgeschlossen ist. Sie geben dem Nutzer auch eine Orientierung, den Spanngurt mittig in Bezug auf den Ladungssicherungswinkel auszurichten. Schließlich dienen die Sicken auch noch als Verstärkung für das Blech des Ladungssicherungswinkels, so dass sich bei gleicher Steifigkeit dünnere Blechstärken realisieren lassen.

In einer bevorzugten Weiterbildung dieser Ausführungsform ist vorgesehen, dass die Enden der Sicken im Bereich der Biegestelle zwischen den Schenkeln auf der Oberseite des horizontalen Schenkels die Erhöhungen zum seitlichen Abstützen einer Flanke der dachförmigen Erhebung bilden. Bei dieser Ausführungsform haben die Sicken eine dreifache Wirkung, nämlich einerseits die Steifigkeit des Bleches zu erhöhen, weiterhin die Verlaufsbahn des Spanngurtes seitlich zu begrenzen und schließlich eine Abstützung für die Auflageflanke der dachförmigen Erhöhung zu bilden, damit diese unter extremen Kräften nicht seitlich ausweichen kann.

Die dachförmige Erhebung kann giebel-, trapez- oder tonnenartig ausgebildet sein, wobei die Auflagestelle an der höchsten Stelle durch einen Biegeradius oder durch eine ebene Fläche mit seitlich anschließenden Biegeradien ausgebildet ist. Bei einer ebenen Fläche kann diese zum Beispiel 30-40 mm breit sein. Wie bereits erwähnt kann die dachförmige Erhebung durch parallel zueinander liegende Sicken versteift sein, die auch eine seitliche Führung für den Spanngurt bilden.

Vorzugsweise sind in dem Ladungssicherungswinkel wenigstens im Bereich des vertikalen Schenkels Ausnehmungen vorgesehen. Derartige Ausnehmungen in Bereichen, in denen keine großen Kräfte übertragen werden müssen, dienen der Gewichtserleichterung des Ladungssicherungswinkels und der Materialeinsparung bei der Herstellung.

Es hat sich gezeigt, dass sich die Blechstärke eines erfindungsgemäßen Ladungssicherungswinkels bis 1,5 mm reduzieren lässt, so dass gegenüber anderen Produkten eine erhebliche Gewichtsersparnis erreicht werden kann, wobei gleichzeitig die gesetzlich geforderte Vorspannkraft von Spanngurten in Höhe von 1.000 dN aufgenommen werden können.

Nachfolgend wird anhand der beigefügten Zeichnungen näher auf ein Ausführungsbeispiel der Erfindung eingegangen. Es zeigen:
- Fig. 1 - 3: verschiedene perspektivische Ansichten eines Ladungssicherungswinkels in der Gebrauchsstellung;
- Fig. 4: gestapelte Ladungssicherungswinkel in einer Ruhestellung;
- Fig. 5 und 6: perspektivische Ansichten einer weiteren Ausführungsform eines Ladungssicherungswinkels;
- Fig. 7: gestapelte Ladungssicherungswinkel gemäß Fig. 5.

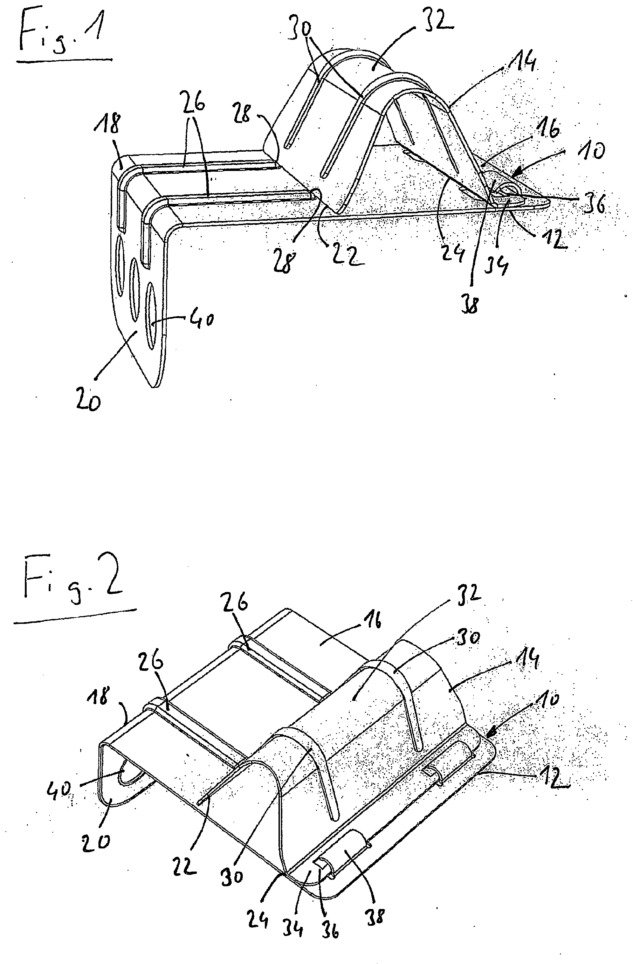

In Fig. 1 ist ein Ladungssicherungswinkel 10 gezeigt, der aus einem ersten L-förmigen Blechteil 12 und einem zweiten, dachförmig ausgebildeten Blechteil 14 besteht. Das L-förmige Blechteil 12 gliedert sich in einen horizontalen Schenkel 16, der über eine Biegestelle 18 mit einem im wesentlichen rechtwinklig abgewinkelten vertikalen Schenkel 20 verbunden ist. Das dachförmige Blechteil 14 bildet in der in Fig. 1 bis 3 gezeigten Gebrauchsstellung des Ladungssicherungswinkels 10 eine dachförmige Erhebung 14, die sich mit ihren beiden Auflageflanken 22, 24 auf der Oberseite des horizontalen Schenkels 16 abstützt.

Das L-förmige Blechteil 12 besitzt an seiner Außenseite zwei parallel zueinander verlaufende Sicken 26, die sich vom vertikalen Schenkel 20 aus über die Biegestelle 18 bis in den horizontalen Schenkel 16 erstrecken, wobei ihre Enden 28 seitliche Abstützungen für eine Flanke 22 der dachförmigen Erhebung 14 bilden. Diese Sicken 26 bilden eine Führungsbahn für den Spanngurt (nicht gezeigt) und versteifen zusätzlich das erste L-förmige Blechteil 12.

Auch das dachförmige Blechteil 14 besitzt zwei parallel zueinander in gleichem Abstand verlaufenden Sicken 30, die zum einen als Versteifung und wiederum zum Ausbilden einer Führung für den Spanngurt im Bereich einer Anlagestelle 32 bilden. Die Anlagestelle 32 liegt an der höchsten Stelle der dachförmigen Erhebung 14.

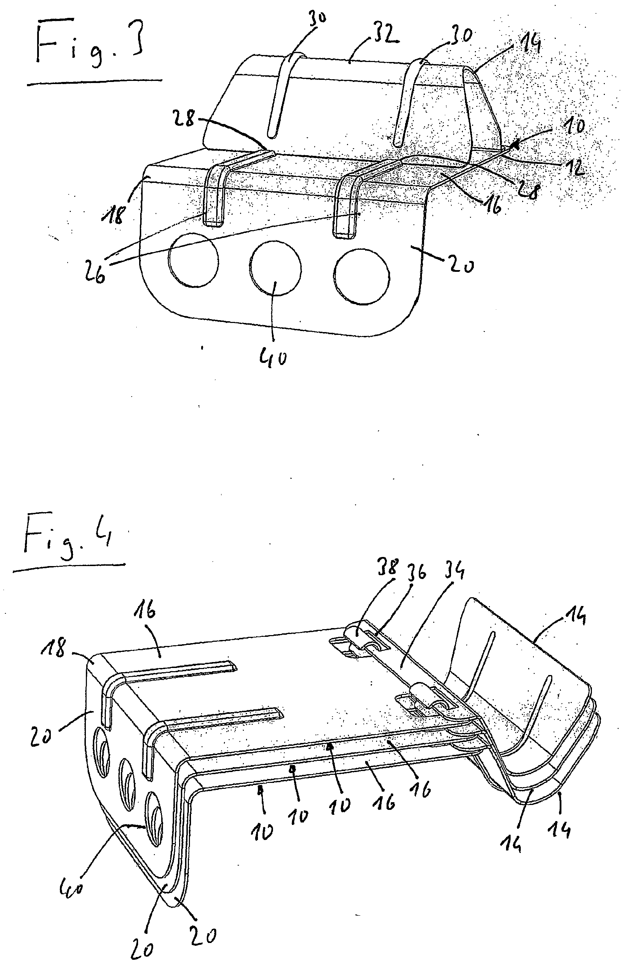

An die zweite Flanke 24 der dachförmigen Erhebung 14 ist durch Umbiegen einer flächiger Bereich 34 angeformt (siehe auch Fig. 2), der mit zwei Schlitzen versehen ist, in welche jeweils eine Blechlasche 38 eingreift, die an dem horizontalen Schenkel 16 angeformt ist. Die Blechlaschen 38 können durch Blechumformung hergestellt werden und bilden zusammen mit den Schlitzen 36 ein Scharnier, das ein Verschwenken der dachförmigen Erhebung 14 beim dargestellten Ausführungsbeispiel um 180° erlaubt. Damit kann die dachförmige Erhebung 14 in eine Ruhestellung verschwenkt werden (siehe Fig. 4), so dass sich mehrere Ladungssicherungswinkel 10 in dieser Ruhestellung aufeinander stapeln lassen.

In dem vertikalen Schenkel 20 sind beispielhaft drei Aussparungen 40 vorgesehen, die der Gewichtserleichterung des Ladungssicherungswinkels 10 dienen. Derartige Aussparungen könnten beispielsweise auch im Bereich des horizontalen Schenkels 16 unterhalb der dachförmigen Erhebung 14 vorgesehen sein, wobei allerdings ein Abstand zu den Flanken 22, 24 der Erhebung 14 vorgesehen sein sollte.

Der beschriebene Ladungssicherungswinkel kann zur Sicherung von Ladung eines Lastkraftwagens, beispielsweise gestapelten Gipskartonplatten genutzt werden, deren Kanten gegen Ausbrechen sehr empfindlich sind. Gleichwohl müssen die Ladungen mit sehr hohen Kräften gegen Verrutschen gesichert werden, wozu in der Regel Spanngurte eingesetzt werden, deren Vorspannkraft nach Vorschrift über 1000 dN betragen soll. Um eine Beschädigung der Gipskartonplatten oder sonstiger empfindlicher Ladung zu vermeiden, werden die Ladungssicherungswinkel 10 an den Verlaufsstellen der Spanngurte von oben mit den horizontalen Schenkeln 16 aufgelegt und dann mit den vertikalen Schenkeln 20 seitlich gegen die Ladung geschoben. Anschließend werden die Spanngurte über die Ladung gelegt und vorgespannt. Der Gurt verläuft dabei über die Biegestelle 18 als erste Anlagestelle sowie die Anlagestelle 32 im Bereich der höchsten Stelle der dachförmigen Erhebung 14. Die von oben eingeleiteten Kräfte werden von der Anlagestelle 32 über die Flanken 22, 24 der dachförmigen Erhebung 14 auf die Oberseite des horizontalen Schenkels 16 abgeleitet. Dieser sorgt für eine großflächige Verteilung der Spannkräfte, so dass die empfindlichen Oberflächen der Ladung nicht beschädigt werden. Ein seitliches Verrutschen der Flanken 22, 24 durch die hohe Krafteinwirkung wird durch die Abstützungen vermieden, die einerseits durch die Enden 28 der Sicken 26 und andererseits durch die Blechlaschen 38 gebildet sind. Die Blechstärke des gezeigten Ladungssicherungswinkels beträgt ungefähr 1,5 mm, so dass sich bei einer Breite von beispielsweise 15 cm ein gut handhabbares Gewicht ergibt, so dass auch ein Stapel aus mehreren Ladungssicherungswinkeln noch von einer Person gut getragen werden kann.

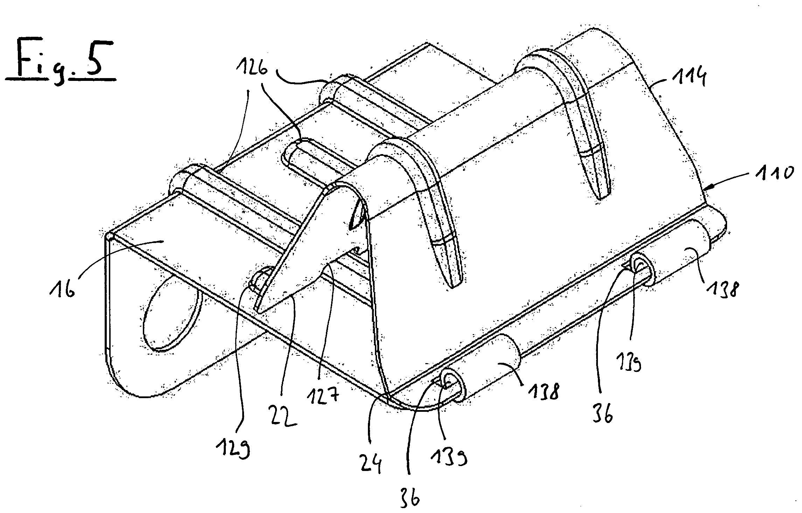

Fig. 5 bis 7 zeigen eine weitere Ausführungsform eines Ladungssicherungswinkels 110, der in einigen Bereichen der zuvor beschriebenen Ausführungsform sehr ähnelt, so dass nur für abweichende Details neue Bezugszeichen vergeben werden.

Fig. 5 zeigt den Ladungssicherungswinkel 110 in der Gebrauchsstellung, in welcher die Flanken 22, 24 auf der flächigen Oberseite des horizontalen Schenkels 16 ruhen. Gut zu erkennen ist in Fig. 5 die abweichende Ausbildung der Scharniere, wobei Blechlaschen 138 nicht im Bereich von ausgestanzten Öffnungen angeordnet sondern an das Ende des horizontalen Schenkels 16 angeformt sind. Dadurch ist es möglich, längere Blechlaschen 138 ausbilden zu können, die entsprechend dann zur Oberseite hin umgebogen werden, wobei sie eine geschlossene Öse 139 bilden können. Dadurch wird der Halt des Scharniers verbessert und auch unter ungünstiger Krafteinwirkung ist die dachförmige Erhebung in allen Richtungen gegen ein Herausrutschen aus den Ösen 139 gesichert.

Abweichend gelöst ist auch die Abstützung der von den beiden Scharnieren entfernt liegenden Flanke 22. Sicken 126 erstrecken sich bei dieser Ausführungsform in dreifacher paralleler Anordnung bis unter die dachförmige Erhebung 14, so dass sie sich nicht zur Abstützung von Querkräften eignen. Die Sicken 126 verlaufen durch Ausnehmungen 127 im Bereich der Flanke 22.

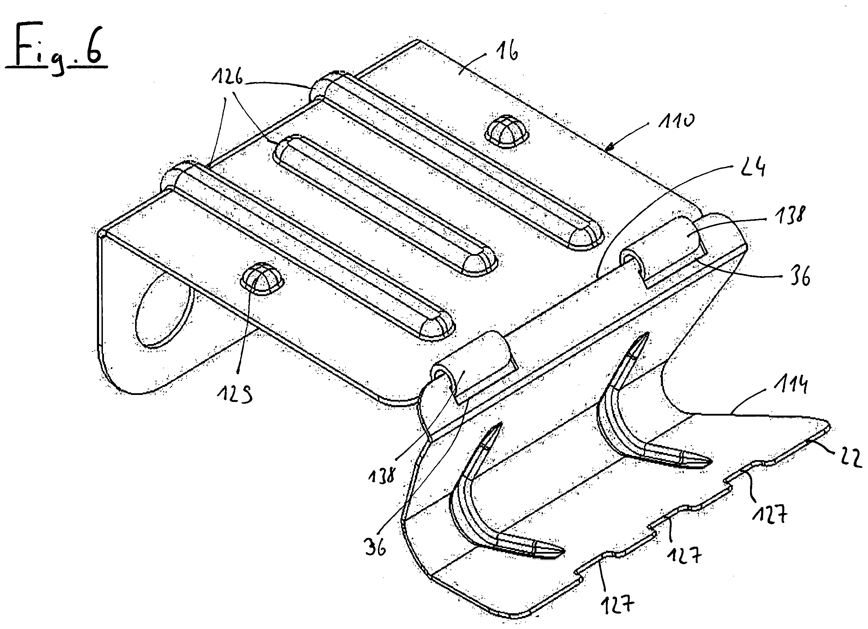

Die Abstützung zur Aufnahme von Querkräften unter der Belastung eines Spanngurtes wird durch punktförmige Prägungen 129 übernommen, die zusätzlich in den horizontalen Schenkel 16 eingearbeitet sind. Die Ausbildung dieser punktförmigen Ausprägung ist in Fig. 6 besonders gut zu erkennen, die den Kantenschutzwinkel 110 im aufgeklappten Zustand zeigt. Bei dieser Darstellung ist auch die geschlossene Ausbildung der Ösen durch die Blechlaschen 138 gut zu erkennen.

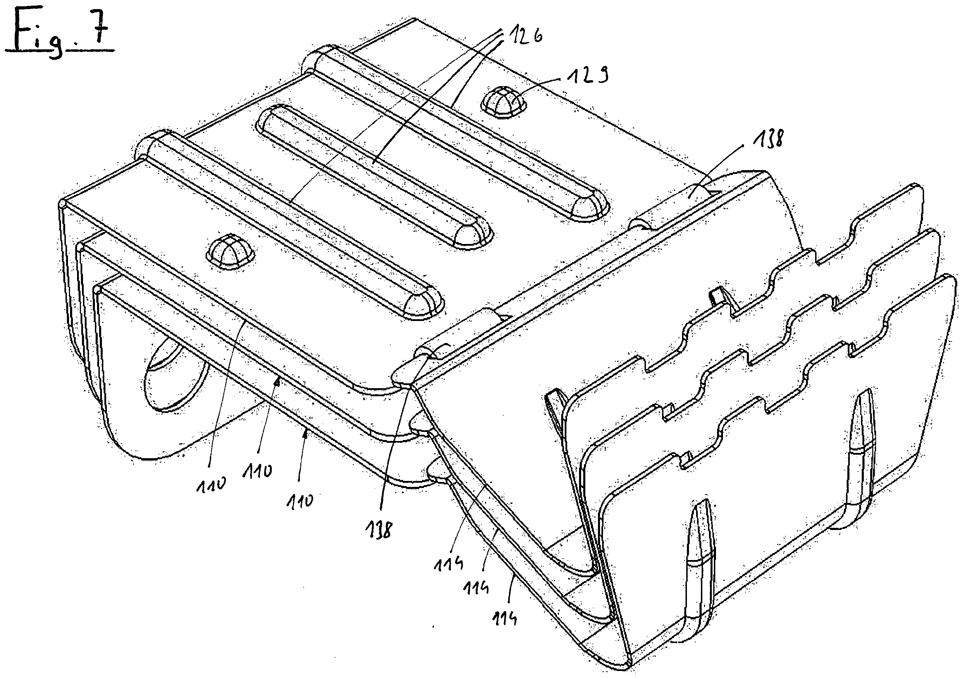

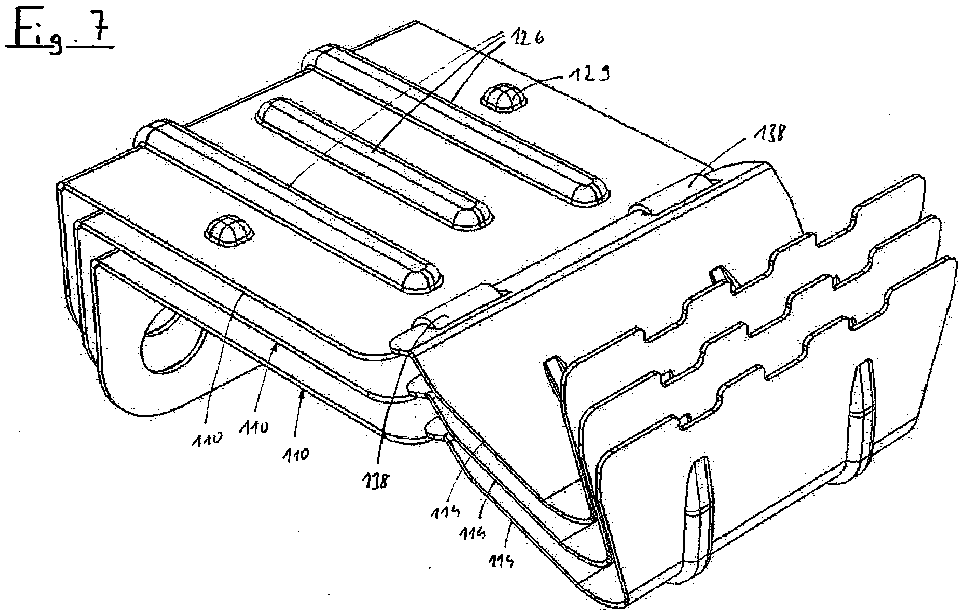

Schließlich ist in Fig. 7 wiederum gezeigt, wie sich die Kantenschutzwinkel 110 im aufgeklappten Zustand platzsparend stapeln lassen. Im Prinzip gelten hier die gleichen Vorteile wie bei der zuvor beschriebenen Ausführungsform, so dass der Stapelzustand an dieser Stelle nicht mehr näher erläutert werden muss.

## Patentansprüche

1. Ladungssicherungswinkel aus Blech mit zwei im wesentlichen rechtwinklig zueinander abgewinkelten Schenkeln (16, 20), wobei ein zur Auflage auf der Ladung bestimmter horizontaler Schenkel (16) eine dachförmige Erhebung (14) aufweist, die eine Andruckstelle (32) für einen Spanngurt bildet, **dadurch gekennzeichnet, dass** die dachförmige Erhebung (14) über ein Scharnier schwenkbar mit dem horizontalen Schenkel (16) verbunden ist und um wenigstens 90° aus der Auflageposition in eine Ruheposition verschwenkbar ist wobei die dachförmige Erhebung (14) zwei Flanken (22, 24) aufweist, die in der Auflageposition auf flächigen Bereichen des horizontalen Schenkels (16) in einer Spannstellung ruhen.

2. Ladungssicherungswinkel nach Anspruch 1, **dadurch gekennzeichnet, dass** das Scharnier durch wenigstens zwei Blechlaschen (38) an dem horizontalen Schenkel (16) gebildet ist, die in Schlitze (36) der dachförmigen Erhebung (14) eingreifen.

3. Ladungssicherungswinkel nach Anspruch 2, **dadurch gekennzeichnet, dass** die Schlitze (36) in einem in der Auflageposition der dachförmigen Erhebung parallel auf dem horizontalen Schenkel (16) aufliegenden Bereich (34) ausgebildet sind.

4. Ladungssicherungswinkel nach Anspruch 2 oder 3, **dadurch gekennzeichnet, dass** die Blechlaschen (38) Erhöhungen zum seitlichen Abstützen der Flanke (24) der dachförmigen Erhebung (14) bilden.

5. Ladungssicherungswinkel nach einem der Ansprüche 2 bis 4, **dadurch gekennzeichnet, dass** die Blechlaschen an das Ende des horizontalen Schenkels (16) angeformt sind und zu dessen Oberseite hin umgebogen sind.

6. Ladungssicherungswinkel nach einem der vorhergehenden Ansprüche, **dadurch gekennzeichnet, dass** der horizontale Schenkel (16) zur Ausbildung der flächigen Bereiche zwischen den Flanken (22, 24) der dachförmigen Erhebung (14) durchgängig ausgebildet ist.

7. Ladungssicherungswinkel nach einem der vorhergehenden Ansprüche, **dadurch gekennzeichnet, dass** die Flanken (22, 24) der dachförmigen Erhebung (14) an Erhöhungen auf der Oberseite des horizontalen Schenkels (16) seitlich abgestützt sind.

8. Ladungssicherungswinkel nach Anspruch 7, **dadurch gekennzeichnet, dass** die Erhöhungen durch Sicken (26), Prägungen und/oder die aufgestellten Blechlaschen (38) gebildet sind.

9. Ladungssicherungswinkel nach einem der vorhergehenden Ansprüche, **dadurch gekennzeichnet, dass** wenigstens im Bereich der Biegestelle (18) zwischen den beiden Schenkeln (16, 20) und im Bereich der Anlagestelle (32) der dachförmigen Erhebung (14) jeweils zwei benachbarte Sicken (26, 30) in der Verlaufsrichtung des Spanngurtes vorgesehen sind, die dessen Lage seitlich begrenzen.

10. Ladungssicherungswinkel nach Anspruch 9, **dadurch gekennzeichnet, dass** die Enden (28) der Sicken (26) im Bereich der Biegestelle (18) zwischen den Schenkeln auf der Oberseite des horizontalen Schenkels (16) die Erhöhungen zum Abstützen der Flanke (22) der dachförmigen Erhebung (14) bilden.

11. Ladungssicherungswinkel nach einem der vorhergehenden Ansprüche, **dadurch gekennzeichnet, dass** die dachförmige Erhebung (14) giebelartig, tonnenartig oder trapezartig ausgebildet ist, wobei die Auflagestelle (32) an der höchsten Stelle durch einen Biegeradius oder durch eine ebene Fläche mit seitlich anschließenden Biegeradien gebildet ist.

12. Ladungssicherungswinkel nach einem der vorhergehenden Ansprüche, **dadurch gekennzeichnet, dass** in wenigstens dem vertikalen Schenkel (20) Ausnehmungen (40) vorgesehen sind.

13. Ladungssicherungswinkel nach einem der vorhergehenden Ansprüche, **dadurch gekennzeichnet, dass** die Blechstärke wenigstens der dachförmigen Erhebung (14) wenigstens 1,5 mm beträgt.

## Claims

1. A load-securing bracket made from sheet metal with two arms (16, 20) arranged essentially at right-angles to each other, whereby a horizontal arm (16) arranged to contact the load comprises a roof-shaped elevation (14), which forms a rest point (32) for a tensioning strap, **characterized in that** the roof-shaped elevation (14) is pivotably connected with the horizontal arm (16) via a hinge and is pivotable by at least 90° from the contact position into a rest position, whereby the roof-shaped elevation (14) comprises two flanks (22, 24), which, in the contact position, rest on flat regions of the horizontal arm (16) in a tensioning position.

2. A load-securing bracket according to claim 1, **characterized in that** the hinge is formed by at least two sheet metal tabs (38) on the horizontal arm (16), which engage with slots (36) of the roof-shaped elevation (14).

3. A load-securing bracket according to claim 2, **characterized in that** the slots (36) are formed in a region lying parallel on the horizontal arm (16) in a contact position of the roof-shaped elevation.

4. A load-securing bracket according to claim 2 or 3, **characterized in that** the sheet metal tabs (38) form elevations for lateral support of the flank (24) of the roof-shaped elevation (14).

5. A load-securing bracket according to one of the claims 2 to 4, **characterized in that** the sheet metal tabs are formed onto the end of the horizontal arm (16) and are bent around towards its upper surface.

6. A load-securing bracket according to one of the previous claims, **characterized in that** the horizontal arm (16) is formed continuously for the formation of the flat areas between the flanks (22, 24) of the roof-shaped elevation (14).

7. A load-securing bracket according to one of the previous claims, **characterized in that** the flanks (22, 24) of the roof-shaped elevation (14) are braced laterally on elevations on the upper surface of the horizontal arm (16).

8. A load-securing bracket according to claim 7, **characterized in that** the elevations are formed by ridges (26), embossings and/or the erected sheet metal tabs (38).

9. A load-securing bracket according to one of the previous claims, **characterized in that** at least in the region of the bend point (18) between the two arms (16, 20) and in the region of the contact point (32) of the roof-shaped elevation (14), two adjacent ridges (26, 30) are provided in the extension direction of the tensioning belt, which restrict its lateral position.

10. A load-securing bracket according to claim 9, **characterized in that** the ends (28) of the ridges (26) form the elevations for bracing the flank (22) of the roof-shaped elevation (14) in the region of the bend point (18) between the arms on the upper surface of the horizontal arm (16).

11. A load-securing bracket according to one of the previous claims, **characterized in that** the roof-shaped elevation (14) is shaped in the form of a gable, a ton or a trapezium, whereby the contact point (32) is formed at the highest point by a bend radius or by a level surface with laterally connecting bend radii.

12. A load-securing bracket according to one of the previous claims, **characterized in that** recesses (40) are provided in at least the vertical arm (20).

13. A load-securing bracket according to one of the previous claims, **characterized in that** the sheet thickness of at least the roof-shaped elevation (14) is at least 1.5 mm.

## Revendications

1. Cornière d'arrimage de chargement en tôle avec deux ailes (16, 20) coudées l'une par rapport à l'autre de manière globalement perpendiculaire, une aile horizontale (16) destinée à s'appuyer sur le chargement ayant une bosse en forme de toit (14) qui constitue un point de pression (32) pour une sangle de serrage, **caractérisée en ce que** la bosse en forme de toit (14) est assemblée à l'aile horizontale (16) de manière à pouvoir pivoter par l'intermédiaire d'une charnière et peut pivoter d'au moins 90° de la position d'appui à une position de repos, la bosse en forme de toit (14) comportant deux flancs (22, 24) qui reposent dans la position d'appui sur des zones surfaciques de l'aile horizontale (16) dans une position de serrage.

2. Cornière d'arrimage de chargement selon la revendication 1, **caractérisée en ce que** la charnière est formée par au moins deux languettes de tôle (38) au niveau de l'aile horizontale (16) qui pénètrent dans des fentes (36) de la bosse en forme de toit (14).

3. Cornière d'arrimage de chargement selon la revendication 2, **caractérisée en ce que** les fentes (36) sont conçues dans une zone (34) reposant, dans la position d'appui de la bosse en forme de toit, parallèlement sur l'aile horizontale (16).

4. Cornière d'arrimage de chargement selon la revendication 2 ou 3, **caractérisée en ce que** les languettes de tôle (38) forment des élévations destinées à un soutien latéral des flancs (24) de la bosse en forme de toit (14).

5. Cornière d'arrimage de chargement selon l'une des revendications 2 à 4, **caractérisée en ce que** les languettes de tôle sont formées à l'extrémité de l'aile horizontale (16) et sont repliées en direction de la face supérieure de celle-ci.

6. Cornière d'arrimage de chargement selon l'une des revendications précédentes, **caractérisée en ce que** l'aile horizontale (16) est conçue sans discontinuité pour former les zones surfaciques entre les flancs (22, 24) de la bosse en forme de toit (14).

7. Cornière d'arrimage de chargement selon l'une des revendications précédentes, **caractérisée en ce que** les flancs (22, 24) de la bosse en forme de toit (14) s'appuient latéralement contre des élévations sur la face supérieure de l'aile horizontale (16).

8. Cornière d'arrimage de chargement selon la revendication 7, **caractérisée en ce que** les élévations sont formées par des moulures (26), des empreintes et/ou les languettes de tôle (38) redressées.

9. Cornière d'arrimage de chargement selon l'une des revendications précédentes, **caractérisée en ce que**, au moins dans la zone du point de flexion (18) entre les deux ailes (16, 20) et dans la zone du point de pression (32) de la bosse en forme de toit (14), il est prévu à chaque fois deux moulures voisines (26, 30) dans la direction d'extension de la sangle de serrage qui limitent latéralement la position de celle-ci.

10. Cornière d'arrimage de chargement selon la revendication 9, **caractérisée en ce que** les extrémités (28) des moulures (26) forment, dans la zone du point de flexion (18) entre les ailes sur la face supérieure de l'aile horizontale (16), les élévations pour soutenir le flanc (22) de la bosse en forme de toit (14).

11. Cornière d'arrimage de chargement selon l'une des revendications précédentes, **caractérisée en ce que** la bosse en forme de toit (14) est conçue à deux pentes, bombée en cintre ou en forme de trapèze, le point de pression (32) au niveau du point le plus haut étant formé par un rayon de courbure ou par une surface plane avec des rayons de courbure latéralement adjacents.

12. Cornière d'arrimage de chargement selon l'une des revendications précédentes, **caractérisée en ce que** des évidements (40) sont prévus au moins dans l'aile verticale (20).

13. Cornière d'arrimage de chargement selon l'une des revendications précédentes, **caractérisée en ce que** l'épaisseur de tôle au moins de la bosse en forme de toit (14) vaut au moins 1,5 mm.
